# FASCICULE DE BREVET EUROPEEN

(11) **EP 2 703 798 B1**
(45) Date de publication et mention de la délivrance du brevet: **13.03.2024**
(21) Numéro de dépôt: 13179875.3
(22) Date de dépôt: 09.08.2013
(51) Int. Cl.: G01L 7/16, G01L 9/00, G01L 17/00

(54) **EQUIPEMENT DE MESURE DE PRESSION DE GONFLAGE D'UN PNEUMATIQUE D'UNE ROUE DE VÉHICULE**
DRUCKMESSGERÄT ZUM MESSEN DES LUFTDRUCKS EINES REIFENS EINES FAHRZEUGRADES
EQUIPMENT FOR MEASURING THE INFLATION PRESSURE OF A TIRE OF A VEHICLE WHEEL

(30) Priorité: 30.08.2012 FR 1258127
(43) Date de publication de la demande: 05.03.2014
(73) Titulaire: Safran Landing Systems, 78140 Vélizy-Villacoublay (FR)
(72) Inventeur: Frank, David, 75013 Paris (FR)
(74) Mandataire: Cabinet Boettcher

(56) Documents cités:
- CN-Y- 2 519 744
- DE-A1- 2 518 859
- FR-A1- 2 462 696
- FR-A1- 2 483 610
- FR-A1- 2 558 256
- JP-A- 2002 333 378
- JP-A- 2003 057 139
- US-A- 5 983 728

## Description

L'invention concerne un équipement de mesure de pression de gonflage d'un pneumatique d'une roue de véhicule.

### ARRIERE PLAN DE L'INVENTION

Les atterrisseurs de la plupart des aéronefs modernes comportent des moyens de mesure de valeurs de paramètres dont une surveillance permet d'assurer que les atterrisseurs sont utilisés dans des conditions permettant d'atteindre des objectifs prédéterminés de sécurité, de maintenance et de coût d'exploitation. Les paramètres mesurés sont par exemple la température des freins, l'usure des disques de carbone dans le cas où les freins sont des freins à disques en carbone, la pression et la température des amortisseurs d'atterrisseur, la pression du gaz gonflant les pneumatiques des roues, etc.

La pression du gaz des pneumatiques des roues d'un aéronef est un paramètre particulièrement critique, qu'il convient de surveiller régulièrement. En effet, un pneumatique sous-gonflé ou surgonflé au moment d'un décollage présente un risque important d'éclatement et de projection de débris pouvant endommager divers équipements de l'aéronef. De plus, une utilisation régulière de pneumatiques sous-gonflés ou surgonflés provoque une usure prématurée des pneumatiques et donc un surcoût d'exploitation important.

Il est désormais obligatoire d'effectuer une mesure de pression de chaque pneumatique des roues de l'aéronef avant chaque vol. Pour cela, on peut soit munir l'aéronef de moyens embarqués permettant de mesurer en permanence la pression et de transmettre des mesures de pression au cockpit, soit réaliser des mesures manuelles au cours d'opérations de maintenance lorsque l'avion est au sol. On utilise dans les deux cas un conduit dont sont munies les jantes des roues, semblable à celui utilisé pour gonfler le pneumatique, permettant de mettre en communication l'intérieur du pneumatique avec un capteur de pression.

La valeur de pression mesurée est bien sûr fortement dépendante de la température du gaz, qui dépend elle-même de la température extérieure, et peut être influencée de façon importante par l'énergie d'un freinage précédant la mesure, etc.

Ainsi, il est indispensable soit de corriger la pression mesurée en fonction de la température, soit de définir des seuils dépendant de la température, au-delà desquels le pneumatique doit être regonflé ou dégonflé. Pour cela, il est nécessaire de mesurer ou d'évaluer la température du pneumatique au moment de la mesure de pression, ce qui conduit à complexifier les moyens embarqués ou à allonger la durée des opérations de maintenance. Une estimation de la pression de gonflage du pneumatique peut donc être obtenue de façon très simple à partir de la position de l'organe indicateur.

Le document FR 2 558 256 A1 divulgue un détecteur avertisseur d'un défaut de pression selon l'art antérieur. D'autres dispositifs d'indication de la pression des pneumatiques sont divulgués dans les documents FR 2 483 610, JP 2002 333378, CN 2 519 744 et JP 2003 057139.

### OBJET DE L'INVENTION

L'invention a pour objet de permettre une mesure de pression d'un pneumatique ne nécessitant pas de correction en fonction de la température.

### RESUME DE L'INVENTION

En vue de la réalisation de ce but, on propose un équipement de mesure de pression de gonflage d'un pneumatique selon la revendication 1.

Ainsi, comme le gaz de référence et le gaz de gonflage sont portés à des températures sensiblement identiques du fait de leur proximité, les effets de ces températures sur les pressions antagonistes exercées sur l'organe indicateur sont très proches et donc se compensent. La position de l'organe indicateur dans le corps ne dépend donc pas de la température. La pression dans le pneumatique peut donc se déduire simplement de la position de l'organe indicateur dans le corps, sans qu'il soit nécessaire de corriger la mesure de pression du pneumatique en fonction de la température.

### BREVE DESCRIPTION DES DESSINS

L'invention sera mieux comprise à la lumière de la description qui suit en référence aux figures des dessins annexés parmi lesquelles :
- la figure 1 est une vue en coupe partielle d'une roue d'un atterrisseur d'aéronef équipée d'un équipement de mesure de pression de l'invention ;
- la figure 2a est une vue en coupe longitudinale d'un équipement de mesure de pression de l'invention selon un premier mode de réalisation, un piston de l'équipement étant dans une position rétractée ;
- la figure 2b est une vue en coupe longitudinale d'un équipement de mesure de pression de l'invention selon un premier mode de réalisation, un piston de l'équipement étant dans une position étendue ;
- les figures 3a et 3b sont des vues en coupe longitudinale d'un équipement de mesure de pression de l'invention selon un deuxième mode de réalisation et selon une variante de ce deuxième mode de réalisation ;
- les figures 4 et 5 sont des vues en coupe longitudinale d'un équipement de mesure de pression selon des exemples qui ne font pas partie de l'invention.

### DESCRIPTION DETAILLEE DE L'INVENTION

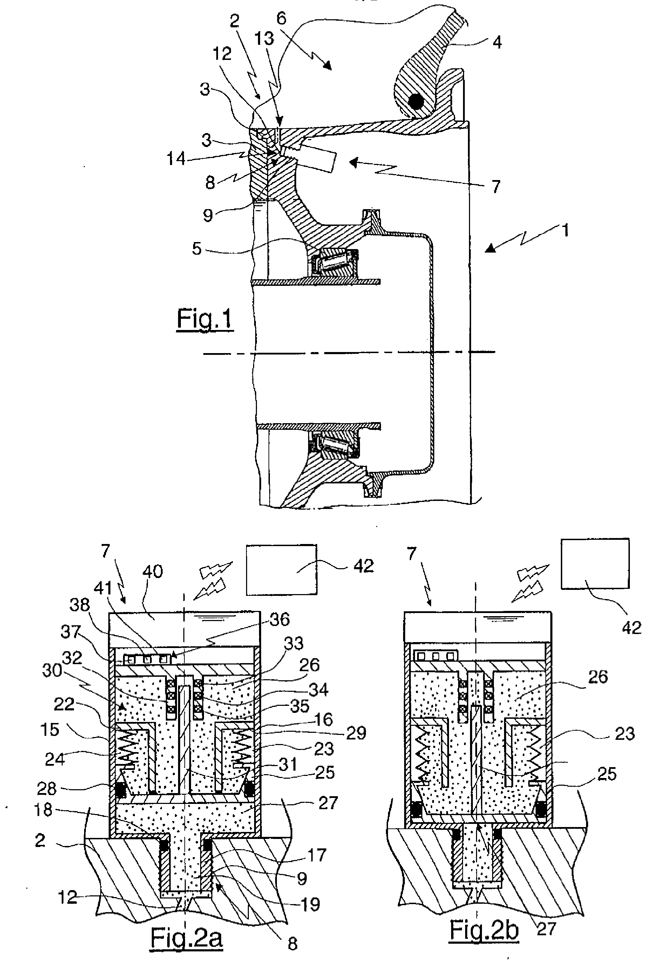

En référence à la figure 1 et de façon connue en soi, une roue 1 d'un atterrisseur d'aéronef comporte une jante 2 composée de deux demi-jantes 3 recevant un pneumatique 4 (esquissé en pointillés). La jante 2 est montée à rotation par l'intermédiaire ici de roulements 5 à rouleaux coniques (un seul roulement est visible). Entre la jante 2 et le pneumatique 4 de la roue 1 s'étend une chambre de gonflage 6 remplie par un gaz de gonflage, généralement de l'azote. Sur l'une des demi-jantes 3 est installé un équipement de mesure de pression 7 de l'invention, destiné à mesurer la pression de gonflage régnant dans la chambre de gonflage 6. L'équipement de mesure de pression 7 est vissé dans un orifice de montage 8 définissant un taraudage 9.

On note ici que, comme l'équipement de mesure est destiné à être vissé directement sur la jante, il est nécessaire de l'installer avant de gonfler le pneumatique (et d'attendre que le pneumatique soit dégonflé pour le dévisser). Il est bien sûr possible de prévoir d'utiliser un équipement intermédiaire muni d'une valve, vissé en permanence sur la jante, et permettant d'installer et de retirer l'équipement de mesure sans dégonfler le pneumatique.

Pour mettre en communication la chambre de gonflage 6 et l'équipement de mesure 7, la jante 2 comporte un conduit 12, dont une première extrémité 13 débouche dans la chambre de gonflage 6 et une seconde extrémité 14 débouche dans l'orifice de montage 8. Le conduit 12, semblable aux conduits utilisés pour gonfler les roues, permet de mettre en communication la chambre de gonflage 6 et l'équipement de mesure de pression 7, de sorte que celui-ci soit soumis à une pression de gonflage proche de la pression régnant dans la chambre de gonflage.

En référence aux figures 2a et 2b, l'équipement de mesure de pression 7 selon un premier mode de réalisation comporte un corps 16 saillant de la jante 2 et un embout de montage 17 partiellement fileté destiné à coopérer avec le taraudage 9 de l'orifice de montage 8. L'embout de montage 17 est muni d'un joint d'étanchéité 18, ici un joint torique, assurant une étanchéité entre le conduit 12 et l'extérieur de la roue pour éviter que le pneumatique 4 ne se dégonfle lorsque l'équipement de mesure de pression 7 est installé. Une ouverture 19 est réalisée dans l'extrémité de montage, permettant à une certaine quantité de gaz de gonflage de pénétrer à l'intérieur du corps 16 via le conduit 12.

Le corps 16 définit un volume interne dans lequel un piston 25 est monté coulissant à étanchéité, formant une séparation étanche entre une première chambre 26 et une seconde chambre 27. Le déplacement du piston 25 est limité par un manchon 22 monté fixe dans le volume interne du corps 16. Pour réaliser l'étanchéité entre la première chambre 26 et la seconde chambre 27, le piston 25 est muni d'un joint 28 d'étanchéité, ici un joint torique. Le piston 25 est en outre solidarisé au manchon 22 par un soufflet 23 qui s'étend dans un espace annulaire 24 défini entre le manchon 22 et le corps 16. Le soufflet 23 permet d'empêcher tout échange gazeux entre la première chambre 26 et la seconde chambre 27 du corps 16.

La première chambre 26 du corps 16 est préremplie par une quantité donnée d'un gaz de référence (azote ou hélium par exemple). Le pré-remplissage est réalisé préalablement au montage de l'équipement de mesure sur la jante de la roue (par exemple lors de la fabrication de l'équipement de mesure). Grâce au soufflet 23, la quantité de gaz de référence contenue dans la première chambre est maintenue constante.

La seconde chambre 27, dans laquelle débouche l'ouverture 19, se remplit de gaz de gonflage au moment du gonflage du pneumatique de la roue, de sorte que, lorsque le pneumatique est gonflé, la pression dans la deuxième chambre est égale à la pression de gonflage du pneumatique.

Le piston 25 est alors soumis à des pressions antagonistes exercées par le gaz de référence et par le gaz de gonflage. Le piston 25 se positionne alors selon la valeur de cette pression de gonflage. On peut donc déterminer la valeur de la pression de gonflage en déterminant la position du piston 25.

On note ici que, comme le gaz de gonflage et le gaz de référence sont portés à des températures sensiblement identiques du fait de leur proximité, les effets de ces températures sur les pressions antagonistes exercées sur le piston 25 sont très proches et se compensent. La position du piston 25 dans le corps 16 ne dépend donc pas de la température, et donc il n'est pas nécessaire de corriger la mesure de pression du pneumatique.

Ainsi, sur la figure 2a, le piston 25 est représenté dans une position dite « rétractée », correspondant à une pression de gonflage suffisamment importante pour que la pression de gonflage repousse le piston 25 qui vient en appui contre le manchon 22, de sorte que le volume de la première chambre 26 soit minimal et celui de la seconde chambre 27 soit maximal.

Inversement, sur la figure 2b, le piston 25 est représenté dans une position dite « étendue» correspondant à une pression de gonflage suffisamment faible pour que la pression exercée par le gaz de référence repousse le piston 25 en butée contre le fond de l'enveloppe, de sorte que le volume de la première chambre 26 soit maximal et celui de la seconde chambre 27 presque nul.

Bien sûr, si le pneumatique est correctement gonflé, le piston 25 trouve une position d'équilibre intermédiaire entre ces deux positions extrêmes.

Pour déterminer la position du piston 25, on utilise ici un capteur de déplacement linéaire 30 de type LVDT (pour Linear Variable Differential Transformer), formé d'une tige métallique 31, solidaire du piston 25 du soufflet 23, et d'un élément de mesure 32 creux de forme extérieure cylindrique. Dans l'élément de mesure 32 sont agencées trois bobines coaxiales : une bobine primaire 33 et deux bobines secondaires 34, 35. Les bobines 33, 34, 35 sont connectées électriquement à un module électrique 36 (les connexions électriques ne sont pas représentées pour simplifier la figure), qui comporte des moyens de génération 37 pour appliquer une tension sur la bobine primaire 33, et des moyens de mesure 38 pour mesurer des tensions sur les bobines secondaires 34, 35 qui dépendent de l'enfoncement de la tige métallique 31 dans l'élément de mesure 32, et donc de la position du piston 25.

Le module électrique 36 est en outre relié à une antenne 40 de l'équipement de mesure 7, et comporte des moyens de transmission 41 agencés pour mettre en forme des mesures réalisées par le capteur de déplacement linéaire 30 et pour les transmettre par une liaison radiofréquence via l'antenne 40. Ces données sont transmises à un équipement de communication 42 situé sur l'aéronef ou bien amené à proximité de la roue 1 par un opérateur au sol.

On note qu'une alimentation électrique du module électrique 36 et du capteur de déplacement linéaire 30 peut être réalisée par des moyens divers non représentés ici, par exemple par transmission d'une énergie électrique par une liaison radiofréquence, ou bien par une batterie équipant l'équipement de mesure 7, ou bien par des moyens de génération d'énergie(par exemple des moyens transformant des vibrations en énergie électrique, ou bien une génératrice tachymétrique qui fournit la vitesse de rotation des roues principales).

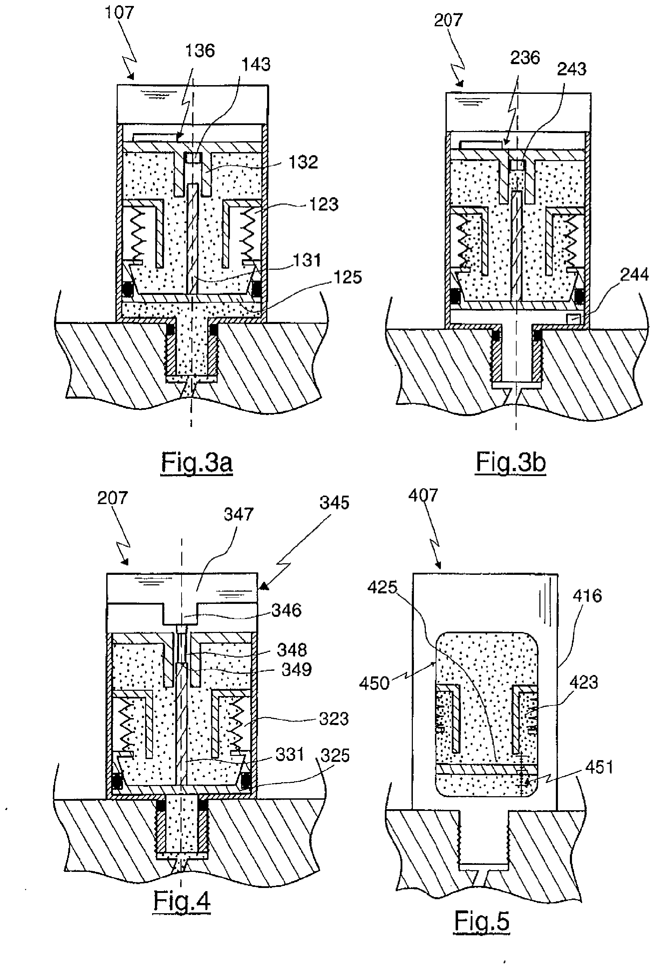

En référence à la figure 3a sur laquelle les références numériques des éléments communs ont été augmentées d'une centaine, et selon une deuxième mode de réalisation, un équipement de mesure 107 ne comporte plus de capteur linéaire de déplacement mais un détecteur de contact 143. Le détecteur de contact 143 est placé au fond d'un élément de mesure 132, et est destiné à détecter un contact avec une tige 131 solidaire d'un piston 125. Le piston 125, la tige 131 et le détecteur de contact 143 sont agencés de sorte que la tige 131 vienne en contact avec le détecteur de contact 143 lorsque le piston 125 est dans une position rétractée. Un signal de contact est alors transmis à un module électrique 136. Ainsi, dans ce deuxième mode de réalisation, on détecte une situation dans laquelle la pression de gonflage est supérieure à un seuil prédéterminé. On pourra par exemple dimensionner l'équipement de mesure de manière à ce que le signal de contact soit émis tant que la pression de gonflage est supérieure à une pression minimale au dessous de laquelle il convient de prévoir une opération de maintenance pour regonfler le pneumatique. L'opération de maintenance est donc décidée lorsque le signal de contact n'est plus transmis.

La figure 3b représente une variante du deuxième mode de réalisation de l'équipement de mesure 207 de l'invention. Ici, l'équipement de mesure 207 est muni d'un premier détecteur de contact 243, de nature et d'agencement similaire au détecteur de contact 143 décrit plus tôt, transmettant un premier signal de contact à un module électrique 236, et d'un second détecteur de contact 244 fournissant au module électrique 236 un deuxième signal de contact indiquant que le piston est dans une position étendue. Ainsi, dans cette variante du deuxième mode de réalisation, on détecte une première situation dans laquelle une pression de gonflage est supérieure à un premier seuil prédéterminé, et une seconde situation dans laquelle une pression de gonflage est inférieure à un second seuil prédéterminé. On pourra par exemple dimensionner l'équipement de mesure de manière à ce que le premier signal et le second signal soient émis respectivement lorsque la pression de gonflage est supérieure et inférieure à une pression maximale et une pression minimale, au-delà desquelles il convient de prévoir une opération de maintenance pour dégonfler ou regonfler le pneumatique.

En référence à la figure 4 et selon un exemple qui ne fait pas partie de l'invention, l'équipement de mesure 307 comporte un comparateur à cadran 345. Le comparateur à cadran comprend un corps 346, un cadran 347, et une tige du comparateur 348. La tige du comparateur 348 est en contact avec une extrémité finale 349 d'une tige 331 solidaire du piston 325. La tige du comparateur 348 est agencée pour coulisser dans le corps 346, selon un enfoncement qui dépend de la position de l'extrémité finale 349 de la tige 331 et donc d'une pression de gonflage d'un pneumatique. Le cadran 347 est muni d'une graduation et d'une aiguille (non visibles ici) dont la position angulaire dépend de la position de la tige et fournit une indication visuelle représentative de la pression de gonflage du pneumatique.

En référence à la figure 5 et selon un exemple qui ne fait pas partie de l'invention, un équipement de mesure 407 comporte un corps 416 comprenant une fenêtre transparente 450 (réalisée par exemple dans une matière plastique transparente) sur laquelle une graduation 451 est représentée. La partie transparente 450 est agencée de sorte qu'un piston 425 dont une position dépend d'une pression de gonflage d'un pneumatique est visible à travers la partie transparente 450, et de sorte que la graduation 451 fournisse, selon la position du piston, une indication représentative de la pression de gonflage.

L'équipement de mesure selon les exemples qui ne font pas partie de l'invention fournit une indication visuelle de la pression de gonflage, accessible par un opérateur au sol. On note que pour ces modes de réalisation, il est nécessaire que l'équipement de mesure soit monté sur une face d'une jante permettant un accès visuel aisé de l'équipement. Outre sa simplicité et sa robustesse, l'équipement de mesure selon les exemples qui ne font pas partie de l'invention présente l'avantage de ne nécessiter aucune source d'alimentation électrique, car son fonctionnement est entièrement mécanique.

L'invention n'est pas limitée aux modes de réalisation particuliers qui viennent d'être décrits, mais, bien au contraire, englobe toute variante entrant dans le cadre de l'invention tel que défini par les revendications.

Bien que l'on ait choisi des moyens de repérage particuliers (capteur de déplacement linéaire, détecteur de contact) pour repérer la position du piston, il est possible d'utiliser des moyens de repérage différents. On pourra notamment remplacer le capteur LVDT par tout type de capteur de déplacement linéaire passif, de type inductif, capacitif ou potentiométrique, etc. On pourra aussi remplacer le détecteur de contact par un détecteur de proximité. On pourra enfin remplacer le comparateur à cadran ou la fenêtre par des indicateurs visuels différents, par exemple un indicateur prenant une couleur différente selon la pression (on pourrait prévoir par exemple un indicateur prenant une couleur verte lorsque la valeur de la pression de gonflage est normale, et rouge lorsqu'elle est anormalement basse).

Bien que l'on ait décrit des agencements particuliers des moyens de repérage, du module électrique, de l'antenne, et des autres éléments de l'équipement, l'invention s'applique bien sûr à des agencements différents de ces éléments. Par exemple, les bobines et la tige du LVDT peuvent être positionnées dans la chambre remplie par le gaz de gonflage, ou bien le module électrique peut être situé dans ladite chambre ou dans la chambre remplie par le gaz de référence.

## Revendications

1. Equipement de mesure de pression de gonflage d'un pneumatique d'une roue (1) de véhicule comportant :
- un corps (16) définissant un volume interne;
- un orifice de communication (19) pour mettre en communication le volume interne du corps (16) avec une chambre de gonflage (6) située entre une jante (2) et un pneumatique (4) de la roue et contenant un gaz de gonflage ;
- un organe indicateur (25 ; 125 ; 325) monté coulissant dans le corps (16) de manière à définir une séparation étanche entre une première chambre (26) contenant une quantité donnée d'un gaz de référence et une seconde chambre (27) dans laquelle débouche l'orifice de communication (19), de sorte que l'organe indicateur (25 ; 125 ; 325) est soumis à des pressions antagonistes régnant dans chacune des chambres, lesdites pressions antagonistes étant exercées par le gaz de référence et par le gaz de gonflage ;
- des moyens de repérage (30 ; 143 ; 243, 244 ; 345 ; 451) pour repérer la position de l'organe indicateur dans le corps, les moyens de repérage comportant un capteur de position (30) de l'organe indicateur, **caractérisé en ce que**:
l'organe indicateur (25 ; 125 ; 325) est solidaire d'un soufflet (23 ; 123 ; 323 ; 423) intégré dans la première chambre.

2. Equipement de mesure de pression d'un pneumatique selon la revendication 1, dans lequel le capteur de position (30) comprend un capteur de déplacement linéaire passif de type inductif ou capacitif ou potentiométrique.

3. Equipement de mesure de pression d'un pneumatique selon la revendication 1, dans lequel le capteur de position (30) comprend un détecteur de contact ou de proximité.

4. Equipement de mesure de pression d'un pneumatique selon la revendication 1, comportant en outre des moyens de transmission (40, 41) pour transmettre des informations générées par les moyens de repérage à un dispositif de communication (42) équipant le véhicule ou amené à proximité du véhicule.

5. Equipement de mesure de pression d'un pneumatique selon la revendication 4, dans lequel les moyens de transmission (40, 41) comportent une antenne (40).

## Patentansprüche

1. Druckmessgerät zum Messen des Luftdrucks eines Reifens eines Fahrzeugrades (1), umfassend:
- einen Körper (16), der ein Innenvolumen definiert;
- eine Kommunikationsöffnung (19), um das Innenvolumen des Körpers (16) mit einer Aufblaskammer (6) in Verbindung zu setzen, die sich zwischen einer Felge (2) und einem Reifen (4) des Rades befindet und ein Aufblasgas enthält;
- ein Anzeigeorgan (25; 125; 325), das in dem Körper (16) derart verschiebbar gelagert ist, dass es eine dichte Trennung zwischen einer ersten Kammer (26), die eine gegebene Menge eines Referenzgases enthält, und einer zweiten Kammer (27) definiert, in die die Kommunikationsöffnung (19) mündet, derart, dass das Anzeigeorgan (25; 125; 325) antagonistischen Drücken ausgesetzt ist, die in jeder der Kammern herrschen, wobei die genannten antagonistischen Drücke durch das Referenzgas und das Aufblasgas ausgeübt werden;
- Positionsbestimmungsmittel (30; 143; 243; 244; 345; 451) zum Bestimmen der Position des Anzeigeorgans in dem Körper, wobei die Positionsbestimmungsmittel einen Positionssensor (30) zur Positionserfassung des Anzeigeorgans umfassen, **dadurch gekennzeichnet, dass**:
das Anzeigeorgan (25; 125; 325) fest mit einem Blasebalg (23; 123; 323; 423) verbunden ist, der in die erste Kammer integriert ist.

2. Druckmessgerät zum Messen des Drucks eines Reifens nach Anspruch 1, bei dem der Positionssensor (30) einen passiven linearen Bewegungssensor vom induktiven oder kapazitiven oder potentiometrischen Typ umfasst.

3. Druckmessgerät zum Messen eines Drucks eines Reifens nach Anspruch 1, bei dem der Positionssensor (30) einen Kontaktdetektor oder einen Näherungsdetektor umfasst.

4. Druckmessgerät zum Messen eines Drucks eines Reifens nach Anspruch 1, ferner umfassend Übertragungsmittel (40, 41) zum Übertragen der von den Positionsbestimmungsmitteln erzeugten Informationen an eine Kommunikationsvorrichtung (42), mit der das Fahrzeug ausgestattet ist oder die in die Nähe des Fahrzeugs gebracht wird.

5. Druckmessgerät zum Messen des Drucks eines Reifens nach Anspruch 4, bei dem die Übertragungsmittel (40, 41) eine Antenne (40) umfassen.

## Claims

1. Measurement equipment for measuring the inflation pressure of a tire of a vehicle wheel (1), the equipment comprising:
· a body (16) defining an internal volume;
· a communication orifice (19) for putting the inside volume of the body (16) into communication with an inflation chamber (6) situated between a rim (2) and a tire (4) of the wheel and containing an inflation gas;
· an indicator member (25; 125; 325) slidably mounted in the body (16) so as to define a gastight separation between a first chamber (26) containing a given quantity of a reference gas and a second chamber (27) into which the communication orifice (19) leads, such that the indicator member (25; 125; 325) is subjected to opposing pressures that exist in each of the chambers, said opposing pressures being exerted by the reference gas and by the inflation gas; and
· position-identification means (30; 143; 243, 244; 345; 451) for identifying the position of the indicator member in the body, the position-identification means including a sensor (30) for sensing the position of the indicator member,
**characterized in that** the indicator member (25; 125; 325) is secured to a bellows (23; 123; 323; 423) incorporated in the first chamber.

2. Tire pressure measurement equipment according to claim 1, wherein the position sensor (30) comprises a passive linear movable sensor of the inductor, or capacitor, or potentiometer type.

3. Tire pressure measurement equipment according to claim 1, wherein the position sensor (30) comprises a contact detector or a proximity detector.

4. Tire pressure measurement equipment according to claim 1, further including transmitter means (40, 41) for transmitting information generated by the position-identification means to a communications device (42) fitted to the vehicle or brought into the proximity of the vehicle.

5. Tire pressure measurement equipment according to claim 4, wherein the transmitter means (40, 41) include an antenna (40).
